# EUROPÄISCHE PATENTSCHRIFT

(11) **EP 3 583 154 B1**
(45) Veröffentlichungstag und Bekanntmachung des Hinweises auf die Patenterteilung: **24.06.2020**
(21) Anmeldenummer: 17707483.8
(22) Anmeldetag: 14.02.2017
(51) Int. Cl.: C08G 77/04, C08G 77/06, C08G 77/08, C08G 77/18

(54) **VERFAHREN ZUR HERSTELLUNG SPHÄRISCHER POLYSILSESQUIOXANPARTIKEL**
METHOD FOR PRODUCING SPHERICAL POLYSILSESQUIOXANE PARTICLES
PROCÉDÉ POUR LA FABRICATION DE PARTICULES DE POLYSILSESQUIOXANE SPHÉRIQUES

(43) Veröffentlichungstag der Anmeldung: 25.12.2019
(73) Patentinhaber: Wacker Chemie AG, 81737 München (DE)
(72) Erfinder: KNÖR, Sebastian, 84547 Emmerting (DE); SEILINGER, Kathrin, 84489 Burghausen (DE)
(74) Vertreter: Fritz, Helmut
(86) Internationale Anmeldenummer: PCT/EP2017/053253
(87) Internationale Veröffentlichungsnummer: WO 2018/149475

(56) Entgegenhaltungen:
- JP-A- H0 488 023
- JP-A- 2000 186 148
- JP-A- 2003 342 370
- JP-A- 2009 068 019

## Beschreibung

Die Erfindung betrifft ein Verfahren zur Herstellung sphärischer Polysilsesquioxanpartikel durch Hydrolyse von Trialkoxysilan und Kondensation des Hydrolysats bei reguliertem pH-Wert.

Der Stand der Technik, beispielsweise JP3970449B2, JPH06248081A und JPH0488023A kennt verschiedene Verfahren zur Herstellung von sphärischen Polymethylsilsesquioxanpartikeln. JP3970449B2 beschreibt die Optimierung der Raum-Zeit-Ausbeute und der Kontrolle der Partikelgröße. Bei der Trocknung kommt es zu einer Verschmelzung der Partikel und den Aufbau einer Netzwerkstruktur. Die Kontrolle der Partikelgröße erfordert insbesondere eine Kontrolle des pH-Werts, da das Größenwachstum der Partikel pH-abhängig ist.

Aus JP3970449B2 und JPH06248081A bekannte Verfahren zur Herstellung von Polymethylsilsesquioxanpartikeln erlauben eine Kontrolle der mittleren Partikelgröße, indem Methyltrialkoxysilan mit sehr niedrigem Chlorgehalt als Rohstoff verwendet wird. Eine unkontrollierte Veränderung des pH-Werts durch den Rohstoff wird also über dessen Reinheit vermieden. Nachteilig ist die Verwendung von sehr reinem Rohstoff, was das Verfahren sehr teuer macht.
Trialkoxysilane enthalten herstellungsbedingt Chlor in Form von freier HCl und gebunden an Silicium, als Chlorsilane, und gebunden an Kohlenstoff, als Chlorkohlenwasserstoffe. Diese chemischen Verbindungen reagieren in Wasser ganz oder teilweise unter Bildung von HCl.
Je nach chemischer Zusammensetzung der Verunreinigungen, können unterschiedliche Chargen des gleichen Rohstoffs bei formal gleichem Gewichts-Gehalt an Chlor bei Kontakt mit Wasser unterschiedliche Mengen an HCl bilden und damit unterschiedlich Sauer reagieren. Dadurch wird die Produktqualität beeinflusst.

Gegenstand der Erfindung ist ein Verfahren zur Herstellung sphärischer Polysilsesquioxanpartikel, bei dem in einem ersten Schritt Trialkoxysilan T, welches
Trialkoxysilane der allgemeinen Formel (I)

RSi(OR¹)₃ (I),

in der
**R** einen Kohlenwasserstoffrest mit 1 bis 16 Kohlenstoffatomen dessen Kohlenstoffkette durch nicht benachbarte Gruppen -O-unterbrochen sein kann,
**R¹** einen C₁- bis C₄-Alkylrest bedeuten,
und Chlorverbindungen enthält,
mit angesäuertem Wasser mit einem pH-Wert von höchstens 6 unter Durchmischung zu einem Hydrolysat umgesetzt wird,
in einem zweiten Schritt der pH-Wert des Hydrolysats auf einen Wert von 1 bis 6 eingestellt wird,
in einem dritten Schritt das Hydrolysat mit einer Lösung einer Base in Wasser oder C₁- bis C₄-Alkanol vermischt wird,
und in einem vierten Schritt die Mischung mindestens 2 h aufbewahrt wird bevor die Polysilsesquioxanpartikel isoliert werden.

Die Erfindung stellt ein Verfahren bereit, dass es erlaubt, ausgehend von Trialkoxysilan T, dem technischen, günstigen Rohstoff eine Fällung bei kontrolliertem pH-Wert durchzuführen und dadurch eine definierte und reproduzierbare Partikelgröße trotz schwankender Rohstoffqualität zu erzeugen.

Bei Verwendung von technischem Trialkoxysilan T, welcher einen stark unterschiedlichen Gehalt an Chlor zwischen unterschiedlichen Rohstoffchargen aufweist, stellt sich jeweils ein sehr unterschiedlicher saurer pH-Wert während der Hydrolyse ein. Dadurch kommt es zu einem unterschiedlichen schnellen Voranschreiten des Netzwerkaufbaus durch Ausbildung von verbrückenden und verzweigenden Einheiten während der sauren Phase der Reaktion. Es bilden sich also in der ersten Reaktionsphase unterschiedlich große Makromoleküle, je nach Chlorgehalt des Trialkoxysilans T, die bei Zugabe der Base im dritten Schritt als Fällungskeime dienen. Vollkommen unerwartet wurde festgestellt, dass unabhängig vom Chlorgehalt des Trialkoxysilans T, immer gleich große Polysilsesquioxanpartikel erhalten werden, wenn im zweiten Schritt der pH-Wert des Hydrolysats auf einen Wert von 1 bis 6 eingestellt wird.

Im erfindungsgemäßen Verfahren wird daher der zweite Verfahrensschritt eingeführt, in dem der pH Wert der Reaktionsmischung nach Beendigung der Zugabe von Trialkoxysilan T, also noch im sauren Milieu justiert wird. Zu diesem Zeitpunkt ist der Reaktionsansatz über mehrere Stunden stabil. Von einem stabilen sauren pH Wert aus, kann nun durch Zugabe einer definierten Menge an Base im dritten Schritt eine gezielte Fällung bei definiertem pH Wert ausgelöst werden.

Insbesondere enthält Trialkoxysilan T herstellungsbedingt Chlor in Form von freier HCl, als Si-Cl in Chlorsilanen und als C-Cl in Chlorkohlenwasserstoffen. Typischerweise beträgt der Gehalt an freier HCl höchstens 100 Gew.-ppm, besonders bevorzugt höchstens 50 Gew.-ppm, insbesondere höchstens 30 Gew.-ppm. Typischerweise beträgt der Gehalt an Chlorsilanen höchstens 3 Gew.-%m, besonders bevorzugt höchstens 2 Gew.-%, insbesondere höchstens 10 Gew.-%.
Vorzugsweise beträgt der Gehalt an Chlorkohlenwasserstoffen höchstens 3 Gew.-%, besonders bevorzugt höchstens 2 Gew.-%, insbesondere höchstens 1 Gew.-%.
Typischerweise beträgt der gesamte Gehalt an Chlor im Trialkoxysilan T höchstens 4000 Gew.-ppm, bevorzugt höchstens 3000 Gew.-ppm, besonders bevorzugt höchstens 2000 Gew.-ppm, insbesondere höchstens 1000 Gew.-ppm.

**R** bedeutet vorzugsweise einen Alkylrest mit 1 bis 6 Kohlenstoffatomen oder Phenylrest, insbesondere Ethylrest oder Methylrest.

**R¹** bedeutet vorzugsweise einen Methyl-, Ethyl-, oder n-Propylrest, insbesondere einen Methylrest.

Bevorzugte Trialkoxysilane der allgemeinen Formel (I) sind Methyltrimethoxysilan, Methyltriethoxysilan, Methyltri-n-propoxysilan, Methyltriisopropoxysilan und Methyltris(2-methoxyethoxy)silan und Gemische davon.

Die Umsetzung zu einem Hydrolysat erfolgt vorzugsweise in angesäuertem Wasser mit einem pH-Wert von höchstens 5,5 besonders bevorzugt höchstens 4,5 und vorzugsweise mindestens 1, besonders bevorzugt mindestens 2, insbesondere mindestens 2,3.

Das eingesetzte Wasser ist vorzugsweise entsalzt und weist vor dem Ansäuern vorzugsweise eine Leitfähigkeit von höchstens 50 µS/cm, bevorzugt höchstens 30 µS/cm, besonders bevorzugt höchstens 20 µS/cm auf, insbesondere bevorzugt höchstens 10 µS/cm auf, jeweils gemessen bei 20°C.

Zum Ansäuern des eingesetzten Wassers können Brønstedt-Säuren oder Lewis-Säuren eingesetzt werden.
Beispiele für Lewis-Säuren sind BF₃, AlCl₃, TiCl₃, SnCl₄, SO₃, PCl₅, POCl₃, FeCl₃ und dessen Hydrate und ZnCl₂. Beispiele für Brønstedt-Säuren sind Salzsäure, Bromwasserstoffsäure, Schwefelsäure, Salpetersäure, salpetrige Säure, Chlorsulfonsäure, Phosphorsäuren, wie ortho-, meta- und Polyphosphorsäuren, Borsäure, selenige Säure, Salpetersäure, Carbonsäuren, wie Ameisensäure, Essigsäure, Propionsäure, Citronensäure und Oxalsäure, Halogenessigsäuren, wie Trichlor- und Trifluoressigsäure, p-Toluolsulfonsäure, saure Ionenaustauscher, saure Zeolithe und säureaktivierte Bleicherde.

Bevorzugt sind Salzsäure, Bromwasserstoffsäure und Essigsäure.

Das Ansäuern des Wassers kann vor der Umsetzung zum Hydrolysat gleichzeitig mit der Umsetzung erfolgen oder sowohl vor der Umsetzung als auch gleichzeitig mit der Umsetzung erfolgen. In einer besonderen Ausführungsform wird das Wasser teilweise vor der Umsetzung zum Hydrolysat mit Salzsäure angesäuert und ein weiterer Teil Salzsäure wird durch das Trialkoxysilan T eingebracht.

Die Hydrolyse des Trialkoxysilans der allgemeinen Formel (I) ist eine schwach exotherme Reaktion. Die Temperatur im ersten Schritt wird in einer bevorzugten Ausführungsform gegebenenfalls durch Heizen oder Kühlen vorzugsweise bei 0°C bis 60°C, bevorzugt bei 10°C bis 50°C, besonders bevorzugt bei 15°C bis 40°C, ganz besonders bevorzugt bei 15 bis 30 °C, insbesondere bei 15 - 25 °C gehalten, wobei die Temperaturschwankung nach Erreichen der Zieltemperatur vorzugsweise weniger als 10 °C, bevorzugt weniger als 5 °C beträgt. Die Dosierung des Trialkoxysilans T kann beliebig vor oder nach Erreichen der Zieltemperatur begonnen werden.

In einer anderen Ausführungsform wird das Trialkoxysilan T in einer Portion zudosiert. Dabei wird die Wärme nicht aktiv oder nur teilweise herausgekühlt. In dieser Ausführungsform findet eine exotherme Zunahme der Temperatur nach Zugabe des Trialkoxysilans T statt. Die Temperatur der Umsetzung im ersten Schritt beträgt 20 °C bis 80°C, vorzugsweise bis 60°C.

Vorzugsweise wird das Trialkoxysilan T in 0,5 bis 5 h, besonders bevorzugt höchstens 2 h dosiert. Zwischen der schnellen Zugabe und der Dosierung gibt es einen fließenden Übergang an erfindungsgemäßen Ausführungsformen, d.h. es kann z.B. zügig in 15 min unter teilweiser Wärmeabführung bis maximal 40°C zugegeben werden, oder es kann z.B. über 2 h dosiert werden, dabei aber nur geringfügig gekühlt werden, wodurch man zunächst einen Temperaturanstieg auf 30°C zulässt und bei dieser Temperatur hält.
Besonders bevorzugt ist die Dosierung bei einer konstanten Temperatur.

Vorzugsweise werden im ersten Schritt auf 100 Gewichtsteile Wasser 5 bis 43 Gewichtsteile, vorzugsweise 11 bis 34 Gewichtsteile, insbesondere 13 bis 25 Gewichtsteile Trialkoxysilan T eingesetzt.

Die Durchmischung im ersten Schritt kann durch einen statischen Mischer oder bevorzugt durch einen Rührer erfolgen.

Vorzugsweise wird nach Dosierung des Trialkoxysilans T 5 min bis 5 h, besonders bevorzugt 10 min bis 3 h insbesondere 15 min bis 1,5 h nachgerührt. Die Nachrührzeit wird vorzugsweise so gewählt, dass die Summe der Zugabezeit des Silans und der Nachrührzeit 6 h nicht überschreiten.

Die Temperatur beim Nachrühren beträgt bei 0°C bis 60°C, bevorzugt bei 10°C bis 50°C, besonders bevorzugt bei 10°C bis 40°C, ganz besonders bevorzugt bei 10 bis 30 °C, insbesondere bei 15 bis 25 °C gehalten. Vorzugsweise ist die Differenz der Temperatur der Umsetzung im ersten Schritt und der Temperatur beim Nachrühren kleiner 20 °C, bevorzugt kleiner 10 °C, insbesondere kleiner 5 °C.

Im zweiten Schritt wird der pH-Wert des Hydrolysats auf einen Wert von 1 bis 6 eingestellt bevor im dritten Schritt das Hydrolysat mit einer definierten Menge an Base gefällt wird. Der Ziel-pH-Wert im sauren Bereich, kann prinzipiell frei definiert werden. Vorzugsweise ist der Ziel-pH-Wert mindestens 2, insbesondere mindestens 2,3, und vorzugsweise höchstens 5,5, besonders bevorzugt höchstens 4,5.
Je genauer der Ziel-pH-Wert eingestellt wird, desto geringer fällt die Streuung der mittleren Partikelgröße zwischen unterschiedlichen Reaktionsansätzen aus. Vorzugsweise ist die Abweichung des pH Werts kleiner ±1, bevorzugt kleiner ±0,5, besonders bevorzugt kleiner ±0,3, insbesondere kleiner ±0,1.

Kinetikstudien mittels NMR haben gezeigt, dass die Geschwindigkeit der Hydrolyse der Trialkoxysilane der allgemeinen Formel (I) im sauren Milieu pH abhängig ist und umso schneller verläuft, je niedriger der pH-Wert ist. Die Geschwindigkeit der Kondensationsreaktion ist ebenfalls pH abhängig und nimmt bei niedrigem pH-Wert zu.

Vorzugsweise wird im zweiten Schritt zur Einstellung des pH-Werts des Hydrolysats eine Säure verwendet, welche auch im ersten Schritt eingesetzt werden kann, oder es wird eine Base verwendet, welche auch im dritten Schritt eingesetzt werden kann.

Zum Ansäuern können Brønstedt-Säuren oder Lewis-Säuren eingesetzt werden.
Beispiele für Lewis-Säuren sind BF₃, AlCl₃, TiCl₃, SnCl₄, SO₃, PCl₅, POCl₃, FeCl₃ und dessen Hydrate und ZnCl₂. Beispiele für Brønstedt-Säuren sind Salzsäure, Bromwasserstoffsäure, Schwefelsäure, Salpetersäure, salpetrige Säure, Chlorsulfonsäure, Phosphorsäuren, wie ortho-, meta- und Polyphosphorsäuren, Borsäure, selenige Säure, Salpetersäure, Carbonsäuren, wie Ameisensäure, Essigsäure, Propionsäure, Citronensäure und Oxalsäure, Halogenessigsäuren, wie Trichlor- und Trifluoressigsäure, p-Toluolsulfonsäure, saure Ionenaustauscher, saure Zeolithe und säureaktivierte Bleicherde.

Bevorzugt sind Salzsäure, Bromwasserstoffsäure und Essigsäure.

Vorzugsweise wird im zweiten Schritt die Base ausgewählt aus Alkalihydroxid, Erdalkalihydroxid, Alkalimethanolat, Ammoniak und organischen Aminen. Bevorzugte organische Amine sind Alkylamine, wie Mono-, Di- oder Triethylamin, Mono-, Di- oder Trimethylamin oder 1,2-Ethylendiamin. Bevorzugt werden die Hydroxide von Li, Na, K eingesetzt. Bevorzugt wird eine Lösung von Alkalihydroxid in Wasser oder in einem Alkanol mit 1 bis 3 Kohlenstoffatomen eingesetzt. Bevorzugte Alkanole sind 1-Propanol, 2-Propanol, Ethanol und insbesondere Methanol. Eine Lösung von Ammoniak oder Alkalihydroxid in Wasser ist ebenfalls bevorzugt. Geeignet sind verdünnte oder konzentrierte Lösungen von Alkalihydroxid 0,001 bis 1100 g/l bei 20 °C, bevorzugt 0,01 bis 500 g/l, besonders bevorzugt 0,1 bis 500 g/l.

Vorzugsweise wird im zweiten Schritt eine Lösung von Alkalihydroxid in Wasser oder in einem Alkanol mit 1 bis 3 Kohlenstoffatomen eingesetzt. Bevorzugte Alkanole sind 1-Propanol, 2-Propanol, Ethanol und insbesondere Methanol. Eine Lösung von Alkalihydroxid in Wasser ist ebenfalls bevorzugt. Geeignet sind verdünnte oder konzentrierte Lösungen von Alkalihydroxid 0,001 bis 1100 g/l bei 20 °C, bevorzugt 0,01 bis 500 g/l, besonders bevorzugt 0,1 bis 500 g/l.
Vorzugsweise erfolgt die Einstellung des pH-Werts des Hydrolysats im zweiten Schritt bei der Temperatur, die das Hydrolysat nach dem ersten Schritt aufweist.

Vorzugsweise erfolgt die Einstellung des pH-Werts des Hydrolysats im zweiten Schritt unter Durchmischung. Dabei kann die Durchmischung durch einen statischen Mischer oder bevorzugt durch einen Rührer erfolgen.

Vorzugsweise wird im dritten Schritt die Base ausgewählt aus Alkalihydroxid, Erdalkalihydroxid, Alkalimethanolat, Ammoniak und organischen Aminen. Bevorzugte organische Amine sind Alkylamine, wie Mono-, Di- oder Triethylamin, Mono-, Di- oder Trimethylamin oder 1,2-Ethylendiamin. Bevorzugt werden die Hydroxide von Li, Na, K eingesetzt. Bevorzugt wird eine Lösung von Alkalihydroxid in Wasser oder in einem Alkanol mit 1 bis 3 Kohlenstoffatomen eingesetzt. Bevorzugte Alkanole sind 1-Propanol, 2-Propanol, Ethanol und insbesondere Methanol. Eine Lösung von Ammoniak oder Alkalihydroxid in Wasser ist ebenfalls bevorzugt. Geeignet sind verdünnte oder konzentrierte Lösungen von Alkalihydroxid 0,001 bis 1100 g/l bei 20 °C, bevorzugt 0,01 bis 500 g/l, besonders bevorzugt 0,1 bis 500 g/1.

Vorzugsweise wird im dritten Schritt eine Lösung von Alkalihydroxid in Wasser oder in einem Alkanol mit 1 bis 3 Kohlenstoffatomen eingesetzt. Bevorzugte Alkanole sind 1-Propanol, 2-Propanol, Ethanol und insbesondere Methanol. Eine Lösung von Alkalihydroxid in Wasser ist ebenfalls bevorzugt. Geeignet sind verdünnte oder konzentrierte Lösungen von Alkalihydroxid 0,001 bis 1100 g/l bei 20 °C, bevorzugt 0,01 bis 500 g/l, besonders bevorzugt 0,1 bis 500 g/l.

Es wurde gefunden, dass im dritten Schritt durch den Einsatz einer Lösung eines Alkalihydroxids, das ausgewählt wird aus NaOH und KOH in Kombination der vorstehend beschriebenen Verfahrensparameter hochgradig agglomerisationsfreie sphärische Polysilsesquioxanpartikel erhalten werden können. Eine Mahlung der Partikel ist nicht erforderlich. Solche Partikel zeigen ein sehr vorteilhaftes Verhalten, insbesondere für kosmetische Anwendungen. Sie gehen bereits bei geringer Scherung in einen Flüssigkeits-ähnlichen fließfähigen Zustand über (Fluidisieren) und sind dadurch außerordentlich leicht zu verteilen und bewirken ein samtiges Hautgefühl. Dieses Verhalten ist bei agglomerierten Partikeln nicht zu beobachten. Diese ballen beim Verteilen auf der Haut zusammen.

Fluides, also flüssigkeits-ähnliches Verhalten, zeigt sich insbesondere direkt nach dem Aufschütteln der Polysilsesquioxanpartikel. Das fluide Verhalten ist umso stärker ausgeprägt, umso stärker die Volumenzunahme ist. Ein Material, das 50% Volumenzunahme aufweist, zeigt bereits fluides Verhalten, was sich beispielsweise darin äußert, das das Material im Gebinde - unmittelbar nach dem Aufschütteln - beim Schwenken des Gebindes ähnlich einer Flüssigkeit hin- und her fließt. Ein Material mit 50% Volumenzunahme sedimentiert sehr schnell und geht in den nicht-fluiden Ausgangszustand zurück, was nachteilig ist. Die sphärischen Polysilsesquioxanpartikel zeigen vorzugsweise mindestens 100% Volumenzunahme.

Die getrockneten ungemahlenen Polysilsesquioxanpartikel weisen vorzugsweise mindestens 30 Gew.-%, bevorzugt mindestens 40 Gew.-%, besonders bevorzugt mindestens 50 Gew.-%, einer Siebfraktion <20 µm auf.

Die getrockneten ungemahlenen Polysilsesquioxanpartikel weisen vorzugsweise mindestens 60 Gew.-%, bevorzugt mindestens 70 Gew.-%, einer Siebfraktion <40 µm auf.

Die getrockneten ungemahlenen Polysilsesquioxanpartikel weisen vorzugsweise weniger als 25 Gew.-%, bevorzugt weniger als 20 Gew.-%, besonders bevorzugt weniger als 15 Gew.-%,einer Siebfraktion >100 µm auf.

Beim Einsatz einer Lösung von Alkalihydroxid in einem Alkanol mit 1 bis 3 Kohlenstoffatomen haften die Partikel besonders wenig aneinander, zeigen einen besonders niedrigeren Agglomerationsgrad und neigen weniger zum Verklumpen. Die Partikel zeigen ein in kosmetischen Anwendungen bevorzugtes trockneres Hautgefühl.

KOH ist als Alkalihydroxid bevorzugt.

Alternativ zu NaOH und KOH ist auch der Einsatz eines NaOH- oder KOH-Bildners möglich, der in zweiten Schritt mit dem im Hydrolysat vorhandenen Wasser sofort zu NaOH oder KOH reagiert.

Beispiele dafür sind Natriumethanolat, Kaliummethanolat, NaH und KH. Bei dieser Ausführungsform ist der Einsatz von Natriumethanolat oder Kaliummethanolat in methanolischer Lösung bevorzugt.

Vorzugsweise wird so viel Lösung von Base zugegeben, dass ein pH Wert von mindestens 6, vorzugsweise mindestens 6,5 und höchstens 10, vorzugsweise höchstens 9,5 erreicht wird, jeweils direkt nach Zugabe der Base gemessen. Durch die Zugabe der Menge an Base kann die Partikelgröße beeinflusst werden, wobei niedrige pH Werte größere Partikel ergeben. Der insbesondere bevorzugte pH Wert beträgt 7,5 bis 9.

Die Lösung von Base wird vorzugsweise innerhalb von 10 Sekunden bis 10 Minuten, insbesondere innerhalb von 1 bis 3 Minuten zugegeben, vorzugsweise unter starkem und kurzem Rühren.

Die Temperatur der Zugabe von Base im dritten Schritt wird in einer bevorzugten Ausführungsform vorzugsweise bei 0°C bis 60°C, bevorzugt bei 10°C bis 50°C, besonders bevorzugt 10°C bis 40°C, ganz besonders bevorzugt bei 10°C bis 30°C, insbesondere bei 15°C bis 25°C gehalten. Vorzugsweise ist die Differenz der Temperatur beim Nachrühren und der Temperatur Zugabe von Base kleiner 20 °C, bevorzugt kleiner 10 °C, insbesondere kleiner 5 °C.

Die Durchmischung im dritten Schritt kann durch einen statischen Mischer oder bevorzugt durch einen Rührer erfolgen.

Nach dem dritten Schritt wird die Durchmischung vorzugsweise innerhalb von 10 Minuten, bevorzugt innerhalb von 5 Minuten beendet. Nach dem zweiten Schritt wird die Mischung vorzugsweise mindestens 1 h, bevorzugt mindestens 1,5 h, besonders bevorzugt mindestens 2,5 h nicht bewegt. Danach kann ein Rührer bei niedriger Drehzahl zugeschaltet werden, um ein Sedimentieren der Partikel zu verhindern. Dies ist optional und nicht notwendig, da sich die sedimentierten Polysilsesquioxanpartikel problemlos aufrühren lassen.

Nach dem dritten Schritt wird die Temperatur der Mischung vorzugsweise mindestens 1 h, bevorzugt mindestens 1,5 h, besonders bevorzugt mindestens 2,5 h nicht mehr als 20 °C, bevorzugt nicht mehr als 10 °C verändert.

Wenn in der Anfangsphase im vierten Schritt, in welchem die Ausbildung der Partikel erfolgt, bewegt wird, treten vermehrt verformte, verwachsene oder agglomerierte Partikel auf.

In einer bevorzugten Ausführungsform wird die Mischung im vierten Schritt bis zur Isolierung der Polysilsesquioxanpartikel nicht bewegt.

Bevorzugt wird die Mischung im vierten Schritt mindestens 4 h, besonders bevorzugt mindestens 7 h, insbesondere mindestens 10 h aufbewahrt, bevor die Polysilsesquioxanpartikel isoliert werden. Auch Aufbewahrungszeiten bis 12 Wochen sind möglich.

Eine Trübung ist meist bereits nach 1 - 30 Minuten zu sehen.

Die Temperatur im vierten Schritt beträgt vorzugsweise 0°C bis 60°C, bevorzugt bei 10°C bis 50°C, besonders bevorzugt 10°C bis 40°C, ganz besonders bevorzugt 10°C bis 30°C, insbesondere 15°C bis 25°C. Bei niedrigen Temperaturen bilden sich größere Partikel, bei höheren Temperaturen bilden sich kleinere Partikel.

Bei einer Temperatur von 15°C bis 25°C besteht ein geringer oder keine Temperaturgradient der Reaktionsmischung zum Außenbereich, dadurch minimaler Wärmegradient zwischen Reaktorwandung und Reaktionslösung und dadurch minimierte thermische Konvektion während der Fällung der Partikel.

Das erfindungsgemäße Verfahren kann als Batchansatz, als Semi-Batch und oder als kontinuierlicher Prozess geführt werden.

Die Mischung wird in einer bevorzugten Ausführungsform nach dem vierten Schritt durch Zugabe einer Säure neutralisiert.
Nach dem vierten Schritt werden die Partikel vorzugsweise isoliert, vorzugsweise durch Abfiltrieren oder Zentrifugieren. Nach dem Isolieren werden die Partikel vorzugsweise mit VE-Wasser oder Alkohol gewaschen und vorzugsweise getrocknet.

Die Trocknung erfolgt vorzugsweise bei 40 bis 250 °C, besonders bevorzugt bei 100 bis 240 °C, insbesondere bevorzugt bei 140 bis 220 °C. Die Trocknung kann unter Umgebungsdruck oder bei vermindertem Druck erfolgen. Während der Trocknung findet auch eine Kondensation freier Si-OH Gruppen statt, die laut Kinetikmessungen vorzugsweise ab 150 °C, besser ab 180 °C, ideal ab 200 °C abläuft. Partikel welche lange Zeit bei 100 °C getrocknet werden, sind zwar Trocken, weisen aber einen hohen Si-OH Gehalt auf. Bei 150 °C ist der Si-OH Gehalt deutlich reduziert, aber noch nicht vollständig entfernt, bei 200 °C werden Si-OH Gruppen nochmals signifikant reduziert. Durch einen reduzierten Si-OH Gehalt ergeben sich Vorteile im Verteilungsverhalten und der Fluidisierung der Partikel.

Die Partikel werden vorzugsweise 0,5 bis 100 h, besonders bevorzugt 0,5 bis 24 h insbesondere 1 bis 14 h getrocknet. Eine besonders hohe Agglomerisationsfreiheit der Polysilsesquioxanpartikel kann durch eine anschließende Mahlung erreicht werden.

In einer besonderen Ausführungsform kann aus der nach dem vierten Schritt erhaltenen Mischung oder aus der durch Isolieren, Waschen und Redispergieren der aus dem vierten Schritt erhaltenen Mischung erhaltenen Dispersion ein trockenes, rieselfähiges Pulver im Sprühtrockner hergestellt werden. Je nach Alkoholgehalt der Mischung wird als Trockengas Luft oder Inertgas, z.B. Stickstoff, Argon, Helium, Magerluft mit maximal 2% Sauerstoff eingesetzt.
Die Sprühtrocknung kann in beliebigen zur Sprühtrocknung von Flüssigkeiten geeigneten und bereits vielfach bekannten Vorrichtungen durchgeführt werden.

In einer besonderen Ausführungsform werden die sprühgetrockneten Polysilsesquioxanpartikel nachgetrocknet, beispielsweise in einem Schaufeltrockner,
Wirbelschichttrockner, Hordentrockner, Stromtrockner oder Trommeltrockner.

Die Polysilsesquioxanpartikel zeigen bei der Untersuchung im Elektronenmikroskop vorzugsweise eine kugelförmige Gestalt. Die sphärischen Polysilsesquioxanpartikel weisen vorzugsweise eine durchschnittliche Sphärizität y von mindestens 0,6, insbesondere mindestens 0,7 auf. Die sphärischen Polysilsesquioxanpartikel weisen vorzugsweise eine durchschnittliche Rundheit x von mindestens 0,6, insbesondere mindestens 0,7 auf. Die Rundheit x und Sphärizität y können nach DIN EN ISO 13503-2, Seite 37, Annex B.3, insbesondere Figur B.1 bestimmt werden.

Vorzugsweise werden alle Verfahrensschritte beim Druck der umgebenden Atmosphäre, also etwa 0,1 MPa (abs.) ausgeführt; sie können auch bei höheren oder niedrigeren Drücken durchgeführt werden. Bevorzugt sind Drücke von mindestens 0,08 MPa (abs.) und besonders bevorzugt mindestens 0,09 MPa (abs.), besonders bevorzugt höchstens 0,2 MPa (abs.), insbesondere höchstens 0,15 MPa (abs.).

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Volumengewichtete Partikelgrößenverteilung d₅₀

Die Bestimmung der volumengewichteten Partikelgrößenverteilung erfolgt nach ISO 13320 mittels statischer Laserstreuung mit dem Gerät Sympatec HELOS mit Trockendispergierer RODOS mit 2 bar Druckluft als Dispergiermedium. Der d₅₀ gibt dabei die mittlere Partikelgröße an.

Die mikroskopischen Untersuchungen wurden mit einem Rasterelektronemikroskop Zeiss SUPRA 55 VP durchgeführt. Die Proben wurden vor der Untersuchung mit einem Sputtercoater CCU-010 der Firma Safematic zur Verhinderung von Aufladungsphänomenen mit Gold besputtert.
Die sphärischen Polysilsesquioxanpartikel der Beispiele 1 und 2 weisen eine durchschnittliche Sphärizität y von 0,8 und eine durchschnittliche Rundheit x von 0,85 auf nach DIN EN ISO 13503-2, Seite 37, Annex B.3, Figur B.1

### Bestimmung des Gehalts an Chlor:

Die Chlorbestimmung erfolgte in einem TOX - 2100H durch Verbrennen der Probe bei 800 °C Inlet Temperatur und 900 °C Outlet Temperatur und anschließende Chlorbestimmung mittels coulometrischer Titration.

Dazu wurden ca. 10 - 50 mg der Probe werden auf 0,1 mg genau in ein Quarzschiffchen eingewogen. Das Verbrennen der Probe erfolgt zunächst im Argon - und anschließend im Sauerstoffstrom. Die Gase werden in eine mit Elektrolytlösung gefüllte Messzelle geleitet. Darin wird anschließend automatisch das bei der Verbrennung entstandene Chlorid coulometrisch titriert.

Die Elektrolytlösung wird wie folgt hergestellt: 0,8 g Gelatine in 100 mL VE - Wasser lösen (evtl. erwärmen), 1,35 g Natriumacetat zugeben und lösen. In einen 1 L Messkolben 850 mL Eisessig vorlegen, die 100 mL Gelatine - Natriumacetatlösung zugeben und mit VE - Wasser auf 1 L auffüllen. Anschließend 1 mL HCl (c=0,01 mol/L) zugeben.

### Messung des pH-Werts:

Ein elektrisches pH Meter mit Glaselektrode wird in die Reaktionsmischung getaucht.

### Beispiele

### Allgemeine Vorschrift 1: Herstellung von Polymethylsilsesquioxan-Partikeln

32 kg vollentsalztes Wasser mit Leitfähigkeit 0,1 µS/cm werden in einem emaillierten 50 Liter Rührkessel mit Mantelkühlung vorgelegt und auf 20 °C temperiert. Dabei wird mit 150 Upm gerührt. Der pH wird durch Zugabe von 0,1 molarer Salzsäure auf einen Wert von 4,40 eingestellt. 7,0 kg Methyltrimethoxysilan werden über 1 h zudosiert, dabei wird die Temperatur auf 20 °C gehalten. Nach Ende der Dosierung wird 30 Minuten bei 20 °C gerührt. (Schritt 1)
Der pH Wert wird optional korrigiert (Schritt 2).
Nach Ende der Korrektur wird weitere 30 Minuten bei 20 °C gerührt. Es werden 363 g 0,5 molare methanolische KOH-Lösung innerhalb 1 min bei 20 °C zugeben und insgesamt 3 min homogen vermischt (Schritt 3). Dann wird der Rührer abgestellt. Nach 21 h (Schritt 4) werden die ausgefallenen Partikel abfiltriert, mit VE-Wasser gewaschen und bei 150 °C 18 h getrocknet

### Beispiel 1

Polymethylsilsesquioxan-Partikel wurden nach der Allgemeinen Vorschrift 1 hergestellt.

### Übersicht der unterschiedlichen Methyltrimethoxysilan Chargen

**Tabelle 1**

| Charge | A | B | C | D | E |
|---|---|---|---|---|---|
| Gehalt "Cl" (ppm) | 100 | 180 | 380 | 510 | 520 |
| pH-Wert der Reaktionslösung nach Schritt 1 | 3,2 | 3,1 | 3,0 | 2,8 | 2,6 |

Nach Schritt 1 wurde der pH Wert auf 2,8 korrigiert. Bei Charge "D" war keine Korrektur erforderlich, da der pH Wert nach Schritt 1 bereits 2,8 betrug. Nach pH Korrektur wurde eine einheitliche mittlere Partikelgröße unabhängig von Chlorgehalt der verwendeten Charge erzielt. Der Mittelwert der mittleren Partikelgröße über alle in Beispiel 1 verwendeten Chargen betrug 4,9 µm mit einer Streuung von weniger als ± 5%.

**Tabelle 2**

| Charge | A | B | C | D | E |
|---|---|---|---|---|---|
| pH-Wert der Reaktionslösung nach Korrektur | 2,8 | 2,8 | 2,8 | n/a | 2, 8 |
| Mittlere Partikelgröße d50 (µm) | 5,1 | 5,0 | 4,8 | 5,0 | 4,7 |

### Beispiel 2

Polymethylsilsesquioxan-Partikel wurden nach der Allgemeinen Vorschrift 1 hergestellt. Nach Schritt 1 wurde der pH Wert von Charge "D" auf 3,2 korrigiert. Bei Charge "A" war keine Korrektur erforderlich, da der pH Wert nach Schritt 1 bereits 3,2 betrug. Nach pH Korrektur wurde eine einheitliche mittlere Partikelgröße unabhängig von Chlorgehalt der verwendeten Charge erzielt. Der Mittelwert der mittleren Partikelgröße über alle in Beispiel 2 verwendeten Chargen betrug ca. 4,2 µm bei einer Streuung von weniger als ± 5%.

**Tabelle 3**

| Charge | A | D |
|---|---|---|
| pH-Wert der Reaktionslösung nach Korrektur | n/a | 3,2 |
| Mittlere Partikelgröße d50 (µm) | 4,1 | 4,3 |

### Vergleichsbeispiel V1

Polymethylsilsesquioxan-Partikel wurden nach der Allgemeinen Vorschrift 1 hergestellt. Nach Schritt 1 wurde der pH Wert nicht korrigiert.
Ohne pH Korrektur variierte der pH Wert nach Schritt 1 abhängig von Chlorgehalt der verwendeten Charge und folglich die mittlere Partikelgröße der gebildeten Partikel. Der Mittelwert der mittleren Partikelgröße über alle im nicht erfindungsgemäßen Vergleichsbeispiel V1 verwendeten Chargen betrug ca. 4,55 µm, bei einer Streuung von ± 10%.

**Tabelle 4**

| Charge | A | D |
|---|---|---|
| pH-Wert der Reaktionslösung nach Schritt 1 (ohne Korrektur) | 3,2 | 2,8 |
| Mittlere Partikelgröße d50 (µm) | 4,1 | 5,0 |

### Vergleichsbeispiel V2

Polymethylsilsesquioxan-Partikel wurden nach der Allgemeinen Vorschrift 1 hergestellt. Nach Schritt 1 wurde der pH Wert bei den beiden Vergleichsversuchen in Vergleichsbeispiel V2 entgegengesetzt angepasst, sodass die pH Werte vergleichsweise stark voneinander abwichen. Die mittlere Partikelgröße der gebildeten Partikel wichen noch deutlicher voneinander ab, als in Vergleichsbeispiel V1. Der Mittelwert der mittleren Partikelgröße über alle im nicht erfindungsgemäßen Vergleichsbeispiel V2 verwendeten Chargen betrug ca. 4,85 µm, bei einer Streuung von ± 20%.

**Tabelle 5**

| Charge | A* | E** |
|---|---|---|
| pH-Wert der Reaktionslösung nach Schritt 1 mit entgegengesetzter Anpassung | 3,5 | 2,5 |
| Mittlere Partikelgröße d50 (µm) | 3,9 | 5,8 |

| | | |
|---|---|---|
| A*: Zur Nachstellung einer Charge mit sehr niedrigem Gehalt an Chlor (entsprechend einem hohem pH Wert nach Schritt 1) wurde der pH Wert nach Schritt 1 durch Zugabe von etwas methanolischer KOH leicht erhöht. E**: Zur Nachstellung einer Charge mit sehr hohem Gehalt an Chlor (entsprechend einem niedrigen pH Wert nach Schritt 1) wurde der pH Wert nach Schritt 1 durch Zugabe von etwas wäßriger HCl . | | |

## Patentansprüche

1. Verfahren zur Herstellung sphärischer
Polysilsesquioxanpartikel, bei dem in einem ersten Schritt Trialkoxysilan T, welches
Trialkoxysilane der allgemeinen Formel (I)
RSi(OR¹)₃ (I),
in der
**R** einen Kohlenwasserstoffrest mit 1 bis 16 Kohlenstoffatomen dessen Kohlenstoffkette durch nicht benachbarte Gruppen -O- unterbrochen sein kann,
**R¹** einen C₁- bis C₄-Alkylrest bedeuten,
und Chlorverbindungen enthält,
mit angesäuertem Wasser mit einem pH-Wert von höchstens 6 unter Durchmischung zu einem Hydrolysat umgesetzt wird, in einem zweiten Schritt der pH-Wert des Hydrolysats auf einen Wert von 1 bis 6 eingestellt wird,
in einem dritten Schritt das Hydrolysat mit einer Lösung einer Base in Wasser oder C1- bis C4-Alkanol vermischt wird,
und in einem vierten Schritt die Mischung mindestens 2 h aufbewahrt wird bevor die Polysilsesquioxanpartikel isoliert werden.

2. Verfahren nach Anspruch 1, bei dem **R** Ethylrest oder Methylrest bedeutet.

3. Verfahren nach einem oder mehreren der voranstehenden Ansprüche, bei dem **R¹** einen Ethylrest oder Methylrest bedeutet.

4. Verfahren nach einem oder mehreren der voranstehenden Ansprüche, bei dem im ersten Schritt die Umsetzung zum Hydrolysat bei einem pH-Wert von 4,5 bis 2 erfolgt.

5. Verfahren nach einem oder mehreren der voranstehenden Ansprüche, bei dem die Temperatur der Umsetzung im ersten Schritt 0°C bis 60°C beträgt.

6. Verfahren nach einem oder mehreren der voranstehenden Ansprüche, bei dem im ersten Schritt auf 100 Gewichtsteile Wasser 5 bis 43 Gewichtsteile Trialkoxysilan eingesetzt werden.

7. Verfahren nach einem oder mehreren der voranstehenden Ansprüche, bei dem im zweiten Schritt die Abweichung des eingestellten pH Werts kleiner ±0,5 ist.

8. Verfahren nach einem oder mehreren der voranstehenden Ansprüche, bei dem im dritten Schritt eine Lösung von Alkalihydroxid in Wasser oder in einem Alkanol mit 1 bis 3 Kohlenstoffatomen eingesetzt wird.

9. Verfahren nach einem oder mehreren der voranstehenden Ansprüche, bei dem im dritten Schritt so viel Lösung von Alkalihydroxid zugegeben wird, dass ein pH Wert von 6,5 bis 9,5 erreicht wird, jeweils direkt nach Zugabe von Alkalihydroxid gemessen.

10. Verfahren nach einem oder mehreren der voranstehenden Ansprüche, bei dem die Temperatur der Zugabe von Alkalihydroxid im dritten Schritt 10°C bis 40°C beträgt.

11. Verfahren nach einem oder mehreren der voranstehenden Ansprüche, bei dem die Partikel nach dem vierten Schritt durch Abfiltrieren oder Zentrifugieren isoliert werden.

## Claims

1. Process for producing spherical polysilsesquioxane particles, wherein in a first step trialkoxysilane T which contains trialkoxysilanes of general formula (I)
RSi(OR¹)₃ (I),
in which
**R** represents a hydrocarbon radical having 1 to 16 carbon atoms whose carbon chain may be interrupted by nonadjacent groups -O-,
**R¹** represents a C₁- to C₄-alkyl radical,
and contains chlorine compounds,
is reacted by mixing with acidified water having a pH of at most 6 to afford a hydrolyzate,
in a second step the pH of the hydrolyzate is adjusted to a value of 1 to 6,
in a third step the hydrolyzate is mixed with a solution of a base in water or C₁- to C₄-alkanol, and in a fourth step the mixture is stored for at least 2 h before the polysilsesquioxane particles are isolated.

2. Process according to Claim 1, wherein **R** represents ethyl radical or methyl radical.

3. Process according to one or more of the preceding claims, wherein **R¹** represents an ethyl radical or methyl radical.

4. Process according to one or more of the preceding claims, wherein in the first step the reaction to afford the hydrolyzate is carried out at a pH of 4.5 to 2.

5. Process according to one or more of the preceding claims, wherein the temperature of the reaction in the first step is 0°C to 60°C.

6. Process according to one or more of the preceding claims, wherein in the first step per 100 parts by weight of water 5 to 43 parts by weight of trialkoxysilane are employed

7. Process according to one or more of the preceding claims, wherein in the second step the deviation in the adjusted pH is less b than ±0.5.

8. Process according to one or more of the preceding claims, wherein in the third step a solution of alkali metal hydroxide in water or in an alkanol having 1 to 3 carbon atoms is employed.

9. Process according to one or more of the preceding claims, wherein in the third step sufficient solution of alkali metal hydroxide is added to ensure that a pH of 6.5 to 9.5 is achieved in each case immediately after addition of alkali metal hydroxide.

10. Process according to one or more of the preceding claims, wherein the temperature of the addition of alkali metal hydroxide in the third step is 10°C to 40°C.

11. Process according to one or more of the preceding claims, wherein the particles are isolated by filtration or centrifugation after the fourth step.

## Revendications

1. Procédé pour la préparation de particules sphériques de polysilsesquioxane, dans lequel, dans une première étape, du trialcoxysilane T, qui contient des trialcoxysilanes de formule générale (I)
RSi(OR¹)₃ (I),
dans laquelle
R signifie un radical hydrocarboné comprenant 1 à 16 atomes de carbone dont la chaîne carbonée peut être interrompue par des groupes -O- non adjacents,
R¹ signifie un radical C₁-C₄-alkyle,
et des composés chlorés,
est transformé avec de l'eau acidifiée présentant un pH d'au plus 6, tout en mélangeant, en un hydrolysat,
dans une deuxième étape, le pH de l'hydrolysat est réglé à une valeur de 1 à 6,
dans une troisième étape, l'hydrolysat est mélangé avec une solution d'une base dans l'eau ou dans un C₁-C₄-alcanol et,
dans une quatrième étape, le mélange est conservé pendant au moins 2 h avant l'isolement des particules de polysilsesquioxane.

2. Procédé selon la revendication 1, dans lequel R signifie un radical éthyle ou un radical méthyle.

3. Procédé selon l'une ou plusieurs des revendications précédentes, dans lequel R¹ représente un radical éthyle ou un radical méthyle.

4. Procédé selon l'une ou plusieurs des revendications précédentes, dans lequel, dans la première étape, la transformation en hydrolysat a lieu à un pH de 4,5 à 2.

5. Procédé selon l'une ou plusieurs des revendications précédentes, dans lequel la température de la transformation dans la première étape est de 0°C à 60°C.

6. Procédé selon l'une ou plusieurs des revendications précédentes, dans lequel on utilise, dans la première étape, pour 100 parties en poids d'eau, 5 à 43 parties en poids de trialcoxysilane.

7. Procédé selon l'une ou plusieurs des revendications précédentes, dans lequel, dans la deuxième étape, la déviation du pH réglé est inférieure à ± 0,5.

8. Procédé selon l'une ou plusieurs des revendications précédentes, dans lequel on utilise, dans la troisième étape, une solution d'hydroxyde de métal alcalin dans de l'eau ou dans un alcanol comprenant 1 à 3 atomes de carbone.

9. Procédé selon l'une ou plusieurs des revendications précédentes, dans lequel, dans la troisième étape, on ajoute une quantité de solution d'hydroxyde de métal alcalin telle qu'on atteint un pH de 6,5 à 9,5, à chaque fois directement après l'addition d'hydroxyde de métal alcalin.

10. Procédé selon l'une ou plusieurs des revendications précédentes, dans lequel la température de l'addition d'hydroxyde de métal alcalin dans la troisième étape est de 10°C à 40°C.

11. Procédé selon l'une ou plusieurs des revendications précédentes, dans lequel les particules sont isolées après la quatrième étape par séparation par filtration ou par centrifugation.
